# EUROPÄISCHE PATENTSCHRIFT

(11) **EP 2 732 398 B1**
(45) Veröffentlichungstag und Bekanntmachung des Hinweises auf die Patenterteilung: **11.04.2018**
(21) Anmeldenummer: 12734879.5
(22) Anmeldetag: 03.07.2012
(51) Int. Cl.: G06F 21/60, H04L 29/06, H04L 12/22, G06F 21/35, G06F 21/44

(54) **VERFAHREN ZUM BETREIBEN EINER NETZWERKEINRICHTUNG**
METHOD FOR OPERATING A NETWORK DEVICE
MÉTHODE D'OPERATION D'UN DISPOSITIF DE RÉSEAU

(30) Priorität: 11.07.2011 DE 102011107586
(43) Veröffentlichungstag der Anmeldung: 21.05.2014
(73) Patentinhaber: EHT Vermögensverwaltung UG, 44801 Bochum (DE)
(72) Erfinder: HORST, Matthias, 44801 Bochum (DE); ERNST, Michael, 44137 Dortmund (DE)
(74) Vertreter: Cohausz & Florack
(86) Internationale Anmeldenummer: PCT/EP2012/062907
(87) Internationale Veröffentlichungsnummer: WO 2013/007555

(56) Entgegenhaltungen:
- EP-A2- 1 320 009
- WO-A1-2011/075825
- US-A1- 2005 114 520
- US-A1- 2011 085 196

## Beschreibung

Die Erfindung betrifft ein Verfahren zum Freigeben einer Netzwerkeinrichtung eines Netzwerksystems, welches mindestens die eine Netzwerkeinrichtung und mindestens einen Server umfasst, wobei in einer Datenbank des Servers mindestens eine zweite einer mobilen Recheneinrichtung zugeordnete Kennung gespeichert ist. Ferner betrifft die Erfindung ein Verfahren zum Registrieren einer mobilen Recheneinrichtung in einem Netzwerksystem mit mindestens einer Netzwerkeinrichtung und mindestens einem Server. Darüber hinaus betrifft die Erfindung ein Computerprogramm und ein Computerprogrammprodukt.

In vielen Unternehmen, aber auch im privaten Bereich, werden vermehrt Netzwerksysteme eingesetzt, um verschiedene elektrische Geräte miteinander zu verbinden. Ein Netzwerksystem kann beispielsweise einen oder mehrere Server und eine Vielzahl von Client-Computern umfassen, welche über ein drahtloses und/oder drahtgebundenes Netzwerk miteinander kommunizieren können. Neben diesen Netzwerkeinrichtungen kann ein Netzwerksystem auch von den Client-Rechnern gemeinsam nutzbare Ressourcen, wie Druckeinrichtungen, Scannereinrichtungen oder dergleichen, aufweisen. Ferner kann ein Netzwerksystem auch weitere direkt von einem Benutzer verwendbare Ressourcen, wie Kopierer oder Faxgeräte, umfassen. Es versteht sich, dass in einem Netzwerksystem ein oder mehrere Multifunktionsgeräte vorhanden sein können, welche verschiedene Funktionen in einem Gerät vereinen.

Beispielsweise aus Sicherheitsgründen kann es jedoch erforderlich sein, dass die Netzwerkeinrichtungen gesichert bzw. geschützt oder gesperrt sind. Unter einer gesicherten Netzwerkeinrichtung ist ein Gerät zu verstehen, welches nur von einem berechtigten Benutzer betrieben werden darf.

Um dies sicherzustellen muss zum Betreiben einer Netzwerkeinrichtung eine Freigabe erfolgen. Vor einer Freigabe kann zunächst überprüft werden, ob ein Benutzer berechtigt ist, eine Netzwerkeinrichtung bzw. eine Funktion einer Netzwerkeinrichtung zu nutzen.

Um eine Berechtigung eines Benutzers zu überprüfen, ist es aus dem Stand der Technik bekannt, dass sich ein Benutzer vor der Durchführung einer gewünschten Aktion an der Netzwerkeinrichtung authentifizieren muss. Beispielsweise ist es bekannt, Benutzernamen und Passwort des Benutzers abzufragen. Die entsprechenden Daten müssen von dem Benutzer manuell eingegeben werden und bringen daher einen entsprechenden Aufwand mit sich. Zudem können unberechtigte Benutzer den berechtigten Benutzer bei der Eingabe der Daten beobachten und die Daten leicht ausspähen, so dass auch ein erhebliches Sicherheitsrisiko besteht.

Alternativ kann jedem berechtigten Benutzer eine Smartcard zur Verfügung gestellt werden. Hierfür muss sich der Benutzer zunächst zentral registrieren lassen. Die Smartcard muss mit einem einmaligen Schlüssel beschrieben werden. Ferner ist es erforderlich, dass jede gesicherte Netzwerkeinrichtung mit einem geeigneten Lesegerät zum Auslesen der Smartcard ausgerüstet ist. Schließlich muss der Benutzer die Smartcard stets bei sich tragen, um ggf. eine Netzwerkeinrichtung betreiben zu können.

Des Weiteren ist es aus dem Stand der Technik bekannt, mobile Recheneinrichtungen, wie ein Personal Digital Assistant (PDA), beispielsweise für ein sicheres Betreiben einer Druckeinrichtung zu verwenden. So offenbart die DE 102 56 961 B4 ein Verfahren zum sicheren Drucken, bei dem in einem ersten Schritt ein verschlüsselter und/oder nicht translatierter Druckauftrag an eine Druckeinrichtung gesendet wird. Ein sichereres Drucken wird hierbei mittels der mobilen Recheneinrichtung ermöglicht. Entweder kann der Benutzer einen Schlüssel von seinem Mobilgerät an die Druckeinrichtung übertragen oder der Druckauftrag kann zunächst an das Mobilgerät übertragen und von diesem entschlüsselt und/oder translatiert werden. Dann kann der Druckauftrag an die Druckeinrichtung zum Drucken zurückgesendet und die Druckeinrichtung freigegeben werden.

Nachteilig an diesem Stand der Technik ist, dass eine Kommunikationsverbindung zwischen dem Mobilgerät und der Druckeinrichtung hergestellt werden muss. Hierfür muss die Druckeinrichtung mit geeigneten Sende- und Empfangsmitteln ausgebildet sein. Zudem ist es erforderlich, dass das Mobilgerät den Schlüssel kennt, mit dem der Druckauftrag verschlüsselt wurde

US2005/0114520 offenbart ein Verfahren zur Nutzung von Netzwerkressourcen eines durch eine Firewall geschützten weiteren Netzwerkes, wobei die Netzwerkressourcen zum Beispiel mittels Bluetooth, infrarot oder eines RFID-tag entdeckt werden.

Daher liegt der vorliegenden Erfindung die Aufgabe zugrunde, ein Verfahren zum Betreiben einer gesicherten Netzwerkeinrichtung zur Verfügung zu stellen, welches eine leichte Registrierung und/oder eine einfache und gleichzeitig sichere Freigabe einer Netzwerkeinrichtung ermöglicht.

Die zuvor hergeleitete und aufgezeigte Aufgabe wird gemäß einem ersten Aspekt der Erfindung bei einem Verfahren zum Freigeben einer Netzwerkeinrichtung eines Netzwerksystems, welches mindestens die eine Netzwerkeinrichtung und mindestens einen Server umfasst, wobei in einer Datenbank des Servers mindestens eine zweite einer mobilen Recheneinrichtung zugeordnete Kennung gespeichert ist, gelöst. Das Verfahren umfasst die Schritte:
- Erfassen einer an der freizugebenden Netzwerkeinrichtung angebrachten ersten Kennung durch die mobile Recheneinrichtung,
- Übertragen der erfassten ersten Kennung und einer zweiten der erfassenden mobilen Recheneinrichtung zugeordneten Kennung von der mobilen Recheneinrichtung an den Server,
- Vergleichen der übertragenen zweiten Kennung mit der mindestens einen in der Datenbank gespeicherten zweiten Kennung, und
- Freigeben der Netzwerkeinrichtung durch den Server bei einem positiven Vergleichsergebnis.

Im Gegensatz zum Stand der Technik ist erfindungsgemäß eine Freigabe einer gesicherten Netzwerkeinrichtung in einfacher Weise mittels einer mobilen Recheneinrichtung, wie einem Mobilfunkgerät, möglich, ohne dass eine zusätzliche Kommunikationseinrichtung an der Netzwerkeinrichtung angebracht werden muss oder ein geheimer Schlüssel der mobilen Recheneinrichtung bekannt sein muss.

Das Netzwerksystem umfasst mindestens eine Netzwerkeinrichtung, insbesondere eine Vielzahl an Netzwerkeinrichtungen, und mindestens einen Server. Die mindestens eine Netzwerkeinrichtung kann über ein Netzwerk zumindest mit dem Server kommunizieren.

Als Netzwerkeinrichtung kann grundsätzlich jede Einrichtung eingesetzt werden, die an ein Netzwerk angebunden werden kann. Insbesondere ist die eine Netzwerkeinrichtung ein gesichertes Gerät, bei dem zumindest eine Funktion gegenüber unberechtigten Benutzern gesperrt ist und aktiv freigegeben werden muss. Beispielhafte und nicht abschließende Netzwerkeinrichtungen sind Client-Computer, Druckeinrichtungen, Scanner, Kopierer und Faxgeräte.

Insbesondere wird zur Freigabe mindestens einer Aktion eine mobile Recheneinrichtung eingesetzt. Beispielhafte und nicht abschließende mobile Recheneinrichtungen sind Mobilfunkgeräte, insbesondere Handys oder Smartphones, PDAs und Tablet-Computer. Bevorzugt kann als mobile Recheneinrichtung ein Gerät verwendet werden, welches (ohnehin) im Besitz eines Benutzers ist, wie ein Smartphone. Bevorzugt handelt es sich nicht um einen Radio Frequency Identification (RFID) Transponder oder eine Smartcard.

An der Netzwerkeinrichtung kann in beliebiger Weise eine erste Kennung angebracht sein. Es ist lediglich erforderlich, dass die Kennung von einer mobilen Recheneinrichtung erfasst werden kann. Beispielsweise kann es erforderlich sein, dass die erste Kennung sichtbar angebracht ist.

Die erste Kennung ist bevorzugt ein einmaliger Code, welcher eindeutig der entsprechenden Netzwerkeinrichtung zugeordnet ist. Mit anderen Worten kann die Netzwerkeinrichtung eindeutig anhand der ersten Kennung identifiziert werden.

Ferner weist die erfassende mobile Recheneinrichtung eine zweite Kennung auf. Die zweite Kennung ist bevorzugt ein einmaliger Code, welcher eindeutig der entsprechenden mobilen Recheneinrichtung zugeordnet ist. Mit anderen Worten kann die mobile Recheneinrichtung eindeutig anhand der zweiten Kennung identifiziert werden. Diese zweite Kennung kann beispielsweise in einem Speicher abgelegt sein, welcher nicht manipuliert werden kann.

Nach Erfassen der ersten Kennung überträgt die mobile Recheneinrichtung bevorzugt automatisch die erste Kennung zusammen mit der zweiten Kennung an den Server.

Der Server ist dazu eingerichtet, die empfangene zweite Kennung mit in der Datenbank gespeicherten zweiten Kennungen zu vergleichen. Beispielsweise können die zweiten Kennungen in einem vorherigen Registrierungsschritt erfasst worden sein. Insbesondere können die zweiten Kennungen von mobilen Recheneinrichtungen, die berechtigten Benutzern zugeordnet sind, zuvor registriert werden, um den berechtigten Benutzern eine Freigabe mindestens einer Funktion der Netzwerkeinrichtung mittels der registrierten mobilen Recheneinrichtung zu ermöglichen.

Bei einem positiven Vergleichsergebnis, wenn also die empfangene zweite Kennung gleich einer gespeicherten zweiten Kennung ist oder zu einer gespeicherten zweiten Kennung korrespondiert, kann die Netzwerkeinrichtung freigegeben werden. Hierbei ist unter dem Freigeben einer Netzwerkeinrichtung zu verstehen, dass mindestens eine Funktion oder Aktion der Netzwerkeinrichtung freigeschaltet wird, also durchführbar, ist.

Der Server kann die Netzwerkeinrichtung insbesondere anhand der ersten Kennung identifizieren. Die Netzwerkeinrichtung kann dann bevorzugt über das Netzwerk freigegeben werden. Beispielsweise kann der Server in einer Datenbank eine Tabelle mit sämtlichen Netzwerkeinrichtungen und deren entsprechenden ersten Kennungen verwalten. Hieraus kann die freizugebende Netzwerkeinrichtung ermittelt werden. Alternativ kann der Server direkt aus der ersten Kennung die freizugebende Netzwerkeinrichtung ableiten.

Bei einem negativen Vergleichsergebnis wird eine Freigabe der Netzwerkeinrichtung verhindert. Beispielsweise kann dem Benutzer dies durch eine Fehlermeldung, die an die mobile Recheneinrichtung gesendet werden kann, mitgeteilt werden.

In einfacher und gleichzeitig sicherer Weise kann eine gesicherte Netzwerkeinrichtung mittels einer mobilen Recheneinrichtung freigegeben werden. Insbesondere wird ein benutzerfreundliches Verfahren zur Verfügung gestellt.

Gemäß einer ersten Ausführungsform des erfindungsgemäßen Verfahrens kann die erste Kennung ein Barcode, insbesondere ein zweidimensionaler Barcode, sein. Ein Barcode kann besonders einfach erzeugt und an einer, bevorzugt sämtlichen, freizugebenden Netzwerkeinrichtung(en) angebracht werden. Es versteht sich, dass jede Netzwerkeinrichtung mit einem eindeutigen und einmaligen Barcode versehen werden kann. Beispielsweise kann ein Barcode aufgeklebt oder aufgedruckt werden. Auch ist es möglich, dass ein Barcode durch ein (ohnehin) vorgesehenes Display der Netzwerkeinrichtung angezeigt werden kann. Es sind keine zusätzlichen Kommunikationsmittel, wie Funksender oder Funkempfänger, erforderlich. Insbesondere können bereits bestehende Netzwerksysteme bzw. Netzwerkeinrichtungen in einfacher Weise nachgerüstet werden.

Grundsätzlich kann die erste Kennung auf beliebige Weise erfasst werden. Gemäß einem bevorzugten Ausführungsbeispiel kann die erste Kennung durch Fotografieren von der mobilen Recheneinrichtung erfasst werden. Die mobile Recheneinrichtung kann beispielsweise eine Kamera aufweisen. In einfacher Weise kann daher ein Benutzer mittels der mobilen Recheneinrichtung die Kennung der Netzwerkeinrichtung, welche bevorzugt ein Barcode ist, erfassen. Insbesondere weisen moderne Mobilfunkgeräte, wie Smartphones, Tablet-Computer, (ohnehin) eine Kamera auf. Es müssen keine zusätzlichen Elemente installiert werden.

Um in einfacher Weise eine Freigabe der Netzwerkeinrichtung zu bewirken, kann zum Freigeben der Netzwerkeinrichtung ein Freigabesignal von dem Server an die Netzwerkeinrichtung übertragen werden. Bevorzugt kann das Freigabesignal über das vorhandene Netzwerk übertragen werden. Hierbei kann das Freigabesignal Daten umfassen, welche dazu geeignet sind, zumindest eine Aktion oder Funktion der Netzwerkeinrichtung freizugeben.

Beispielsweise kann lediglich ein Druckauftrag freigegeben werden. Der Druckauftrag kann von dem Benutzer in herkömmlicher Weise erstellt und mit einer dritten Kennung versehen werden. Der Druckauftrag kann dann in der Druckeinrichtung oder einem Druckserver empfangen werden. Das Freigabesignal kann insbesondere eine dritte dem Benutzer zugeordnete Kennung umfassen. Dann kann die Netzwerkeinrichtung die empfangene Kennung mit der Kennung, die mit dem Druckauftrag verknüpft ist, vergleichen. Bei einem positiven Vergleichsergebnis kann der Druckauftrag von der Druckeinrichtung ausgeführt werden. Bei einem negativen Vergleichsergebnis bleibt der Druckauftrag gesperrt.

Wie bereits beschrieben wurde, kann die zweite Kennung insbesondere einmalig und eindeutig der mobilen Recheneinrichtung zugeordnet sein. Beispielsweise kann eine zweite Kennung generiert und bevorzugt in einem Read-Only Memory (ROM) gespeichert werden. Gemäß einer bevorzugten Ausführungsform des erfindungsgemäßen Verfahrens kann die zweite Kennung eine Seriennummer, insbesondere eine International Mobile Station Equipment Identity (IMEI), sein. Durch die Verwendung einer (ohnehin) in der mobilen Recheneinrichtung vorgesehenen Kennung, kann auf einen zusätzlichen Generierungs- und/oder Speicherschritt verzichtet werden. Ferner ist mittels der IMEI eine eindeutige Identifizierung von jedem Mobilgerät möglich. Eine hohe Sicherheit kann gewährleistet werden.

Ein zweiter Aspekt der vorliegenden Erfindung ist ein Verfahren zum Registrieren einer mobilen Recheneinrichtung in einem Netzwerksystem mit mindestens einer Netzwerkeinrichtung und mindestens einem Server. Das Verfahren umfasst die Schritte:
- Übertragen einer dem Benutzer zugeordneten dritten Kennung von einer Netzwerkeinrichtung an einen Server,
- Übertragen eines Codes an die Netzwerkeinrichtung, wobei der Code zusammen mit der dritten Kennung in einer Datenbank des Servers gespeichert wird,
- Erfassen des an die Netzwerkeinrichtung übertragenen Codes von einer mobilen Recheneinrichtung,
- Übertragen des erfassten Codes und einer der mobilen Recheneinrichtung zugeordneten zweiten Kennung an den Server,
- Vergleichen des empfangenen Codes mit dem zumindest einen in der Datenbank gespeicherten Code, und
- Speichern der dritten Kennung zusammen mit der zweiten Kennung in der Datenbank bei einem positiven Vergleichsergebnis.

Dieses eingeständig erfinderische Verfahren ermöglicht im Gegensatz zum Stand der Technik eine benutzerfreundliche und sichere Registrierung einer mobilen Recheneinrichtung, welche beispielsweise zur Freigabe einer Netzwerkreinrichtung entsprechend dem zuvor beschriebenen Verfahren eingesetzt werden kann.

Das Verfahren kann beispielsweise von einem Benutzer an einer Netzwerkeinrichtung gestartet werden. Eine Netzwerkeinrichtung überträgt eine dritte Kennung an einen Server bevorzugt über ein Netzwerk. Die dritte Kennung kann ein Code sein. Dieser Code ist insbesondere einmalig und dem Benutzer eindeutig zugeordnet. Mit anderen Worten kann durch die dritte Kennung der Benutzer eindeutig identifiziert werden.

Insbesondere nach Empfang der dritten Kennung kann der Server einen Code generieren und als Antwort an die Netzwerkeinrichtung übertragen oder einen bereitgestellten Code als Antwort an die Netzwerkeinrichtung übertragen. Ferner kann der Code einmalig sein und bevorzugt eindeutig der dritten Kennung zugeordnet werden. Der Code, wie eine Kopie des Codes oder ein zu dem Code eindeutig korrespondierender Code, kann dann zusammen mit der dritten Kennung in einer Datenbank des Servers gespeichert werden.

Der von der Netzwerkeinrichtung empfangene Code kann von dieser bereitgestellt werden, derart, dass der Code durch die mobile Recheneinrichtung erfasst werden kann. Grundsätzlich kann der Code in beliebiger Weise erfasst werden. Beispielsweise kann der Code automatisch durch die mobile Recheneinrichtung oder aufgrund einer Benutzeraktion erfasst werden.

Die mobile Recheneinrichtung kann dazu konfiguriert sein, den Code mit einer zweiten Kennung zu verknüpfen. Wie bereits ausgeführt wurde, kann die zweite Kennung einmalig sein und eindeutig die mobile Recheneinrichtung identifizieren.

Der Code kann dann zusammen mit der zweiten Kennung von der mobilen Recheneinrichtung an den Server übertragen werden. Der Server ist dazu eingerichtet, den empfangenen Code mit dem mindestens einen Code, der in der Datenbank gespeichert ist, zu vergleichen. Bei einem positiven Vergleichsergebnis wird die zweite Kennung in der Datenbank gespeichert. Insbesondere wird die zweite Kennung zusammen mit der dritten Kennung abgespeichert. Mit anderen Worten wird die mobile Recheneinrichtung (zentral) registriert.

Das Verfahren ermöglicht eine benutzerfreundliche und gleichzeitig sichere Registrierung einer mobilen Recheneinrichtung eines Benutzers.

Gemäß einer ersten Ausführungsform des erfindungsgemäßen Verfahrens kann der Code eine Zufallszahl insbesondere in Form eines Barcodes sein. Eine Zufallszahl kann in einfacher Weise generiert und übertragen werden.

Der Code kann grundsätzlich beliebig von der mobilen Recheneinrichtung erfasst werden. Gemäß einer bevorzugten Ausführungsform des erfindungsgemäßen Verfahrens kann der Code zum Erfassen durch die mobile Recheneinrichtung von der Netzwerkeinrichtung angezeigt werden. Die Netzwerkeinrichtung kann eine geeignete Anzeige aufweisen oder mit einer Anzeige verbunden sein. Als Anzeige kann insbesondere ein geeignetes Display eingesetzt werden. Besonders einfach kann eine Zufallszahl in Form eines Barcodes, insbesondere eines zweidimensionalen Barcodes, angezeigt werden. Es versteht sich, dass auch Schriftzeichen oder dergleichen als Code angezeigt werden können.

Der angezeigte Code kann gemäß einer weiteren Ausführungsform durch Fotografieren von der mobilen Recheneinrichtung erfasst werden. Die mobile Recheneinrichtung kann beispielsweise eine Kamera aufweisen. In einfacher Weise kann daher ein Benutzer mittels der mobilen Recheneinrichtung den Code, welcher bevorzugt ein zweidimensionaler Barcode ist, erfassen. Insbesondere weisen moderne Mobilfunkgeräten eine Kamera auf.

Die zweite Kennung kann insbesondere einmalig und eindeutig der mobilen Recheneinrichtung zugeordnet sein. Beispielsweise kann eine zweite Kennung generiert und bevorzugt in einem ROM-Speicher gespeichert werden. Gemäß einer bevorzugten Ausführungsform kann die zweite Kennung eine Seriennummer, insbesondere eine International Mobile Station Equipment Identity (IMEI), sein. Durch die Verwendung einer (ohnehin) vorgesehen Kennung. Mittels der IMEI ist eine eindeutige Identifizierung von jedem Mobilgerät möglich. Eine hohe Sicherheit kann gewährleistet werden.

Darüber hinaus kann gemäß einer weiteren Ausführungsform des Verfahrens gemäß dem zweiten Aspekt vor dem Übertragen der dritten Kennung von der Netzwerkeinrichtung an den Server eine Authentifizierung eines Benutzers an der Netzwerkeinrichtung durchgeführt werden. Beispielsweise kann ein Benutzer dazu aufgefordert werden, eine dritte Kennung, beispielsweise einen einmaligen und eindeutigen Benutzernamen, und einen Schlüssel einzugeben. Eine Registrierung ist nur möglich, wenn der Benutzer eine entsprechende Berechtigung durch eine erfolgreiche Authentifizierung nachweist.

Es sei angemerkt, dass unter einer einmaligen Kennung bzw. einem einmaligen Code zu verstehen ist, dass diese Kennung bzw. dieser Code zumindest in dem einen Netzwerksystem (nur) einmal eingesetzt und einer einzigen Entität zugewiesen ist.

Ein weiterer Aspekt der vorliegenden Erfindung ist ein Computerprogramm mit Instruktionen ausführbar auf einem Prozessor derart, dass eine Netzwerkeinrichtung mittels des zuvor beschriebenen Verfahrens freigegeben wird und/oder eine mobile Recheneinrichtung mittels des zuvor beschriebenen Verfahrens registriert wird. Bevorzugt kann ein Computerprogramm bereitgestellt werden, welches zunächst eine Registrierung ermöglicht und dann eine Freigabe erlaubt. Alternativ können auch zwei separate Computerprogramme bereitgestellt werden.

Ein weiterer Aspekt der vorliegenden Erfindung ist ein Computerprogrammprodukt umfassend ein zuvor beschriebenes Computerprogramm mit Instruktionen ausführbar auf einem Prozessor derart, dass eine Netzwerkeinrichtung mittels des zuvor beschriebenen Verfahrens freigegeben wird und/oder eine mobile Recheneinrichtung mittels des zuvor beschriebenen Verfahrens registriert wird. Bevorzugt kann ein Computerprogrammprodukt mit einem Computerprogramm bereitgestellt werden, welches zunächst eine Registrierung ermöglicht und dann eine Freigabe erlaubt. Alternativ können auch zwei separate Computerprogrammprodukte mit separaten Computerprogrammen bereitgestellt werden.

Es gibt nun eine Vielzahl von Möglichkeiten, das erfindungsgemäße Verfahren zum Freigeben einer Netzwerkeinrichtung eines Netzwerksystems, das erfindungsgemäße Verfahren zum Registrieren einer mobilen Recheneinrichtung in einem Netzwerksystem, das erfindungsgemäße Computerprogramm und das erfindungsgemäße Computerprogrammprodukt auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Netzwerksystems gemäß der Erfindung;
- Fig. 2: ein Flussdiagramm eines Ausführungsbeispiels eines Verfahrens zum Registrieren einer mobilen Recheneinrichtung in einem Netzwerksystem gemäß der vorliegenden Erfindung; und
- Fig. 3: ein weiteres Flussdiagramm eines Ausführungsbeispiels eines Verfahrens zum Freigeben einer Netzwerkeinrichtung gemäß der vorliegenden Erfindung.

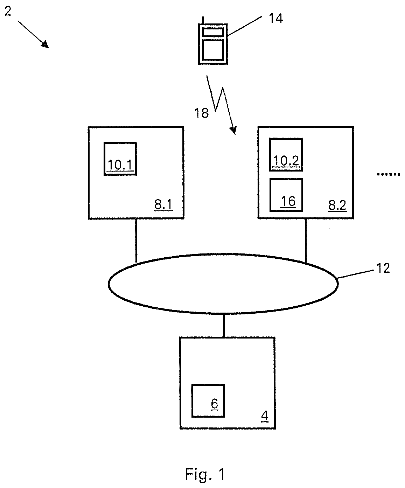

Figur 1 zeigt eine schematische Ansicht eines Ausführungsbeispiels eines Netzwerksystems 2 gemäß der vorliegenden Erfindung.

Das dargestellte Netzwerkssystem 2 umfasst mindestens einen Server 4. Der Server 4 kann als Computer 4 ausgebildet sein und einen Prozessor, Speichermittel, Schnittstellen und dergleichen aufweisen. Insbesondere kann der Server 4 zumindest eine Datenbank 6 aufweisen.

Es versteht sich, dass der Server 4 gemäß anderen Varianten der Erfindung auch mit einer entfernt angeordneten Datenbank verbunden sein kann und/oder zwei oder mehr Datenbanken vorgesehen sein können. Ferner versteht es sich, dass in einem Netzwerksystem zwei oder mehr Server vorgesehen sein können.

Darüber hinaus umfasst das Netzwerkssystem 2 mindestens eine Netzwerkeinrichtung 8.1, 8.2. Bei der Netzwerkeinrichtung 8.1, 8.2 handelt es sich insbesondere um eine Ressource, die von zumindest einem Benutzer verwendet werden kann. Beispielsweise kann die Netzwerkeinrichtung 8.1 ein Client-Computer sein, der von einem oder mehreren Benutzern verwendet werden kann. Ein Client-Computer kann ein herkömmlicher PC, ein Notebook oder dergleichen sein. Bei der Netzwerkeinrichtung 8.2 kann es sich um eine von zum Beispiel mehreren Client-Computern gemeinsam nutzbare Ressource, wie eine Druckeinrichtung, eine Scanneinrichtung, eine Kopiereinrichtung und/oder eine Faxeinrichtung, handeln.

Im vorliegenden Ausführungsbeispiel sind zwei Netzwerkeinrichtung 8.1 und 8.2 dargestellt. Beispielsweise können ein Client-Computer 8.1 und ein Netzwerkdrucker 8.2 vorgesehen sein. Es versteht sich, dass ein Netzwerkssystem 2 eine Vielzahl an (unterschiedlichen) Netzwerkeinrichtungen aufweisen kann.

Ein Client-Computer 8.1 kann insbesondere eine Anzeige 10.1 aufweisen. Zum Beispiel kann der Client-Computer mit einem Bildschirm 10.1 verbunden sein. Ferner kann ein Client-Computer 8.1 einen Prozessor, Speichermittel, Schnittstellen und dergleichen aufweisen.

Eine Druckeinrichtung 8.2 kann ebenfalls eine Anzeige 10.2 zum Beispiel in Form eines Displays aufweisen und einen Prozessor, Speichermittel, Schnittstellen umfassen. Ferner kann an der Druckeinrichtung 8.2 eine weitere Anzeigeneinrichtung 16 angeordnet sein, welche insbesondere eine erste Kennung anzeigen kann. Bei der Anzeigeneinrichtung 16 kann es sich um das Display 10.2, ein anderes Display, oder eine Fläche zur Anbringung einer ersten Kennung beispielsweise in Form eines Aufklebers oder dergleichen handeln. Die erste Kennung ist bevorzugt eine einmalige Kennung und eindeutig der Druckeinrichtung 8.2 zugeordnet. Es versteht sich, dass gemäß anderen Varianten der Erfindung sämtliche Netzwerkeinrichtungen jeweils eine erste Kennung aufweisen können.

Die Netzwerkeinrichtungen 8.1 und 8.2 können miteinander und/oder mit dem Server 4 über ein Netzwerk 12 verbunden sein. Das Netzwerk 12 kann ein lokales oder ein nichtlokales Netzwerk 12 sein. Darüber hinaus kann es sich um ein drahtloses oder ein drahtgebundenes Netzwerk 12 handeln. Beispielhafte Netzwerke 12 sind ein Local Area Network (LAN), eine Wireless LAN (WLAN), ein Wide Area Network (WAN), etc. Es versteht sich, dass unterschiedliche Teilnetzwerke auch zu einem Netzwerk 12 kombiniert werden können.

Wie der Figur 1 entnommen werden kann, weist das Netzwerkssystem 2 mindestens eine mobile Recheneinrichtung 14 auf. Die mobile Recheneinrichtung 14, wie ein Smartphone, ein Personal Digital Assistant (PDA), ein tragbare Computer, beispielsweise ein Laptop oder ein Tablet-Computer, kann einem Benutzer des Netzwerkssystems 2 zugeordnet sein. Beispielsweise kann jeder Benutzer des Netzwerksystems 2 mindestens eine mobile Recheneinrichtung 14 haben.

Die mobile Recheneinrichtung 14 weist mindestens eine geeignete Schnittstelle auf, um beispielsweise über das Netzwerk 12 oder einen anderen Kommunikationskanal 18 zumindest mit dem Server 4 kommunizieren zu können. Ferner kann die mobile Recheneinrichtung 14 insbesondere Erfassungsmittel, wie eine Kamera, umfassen.

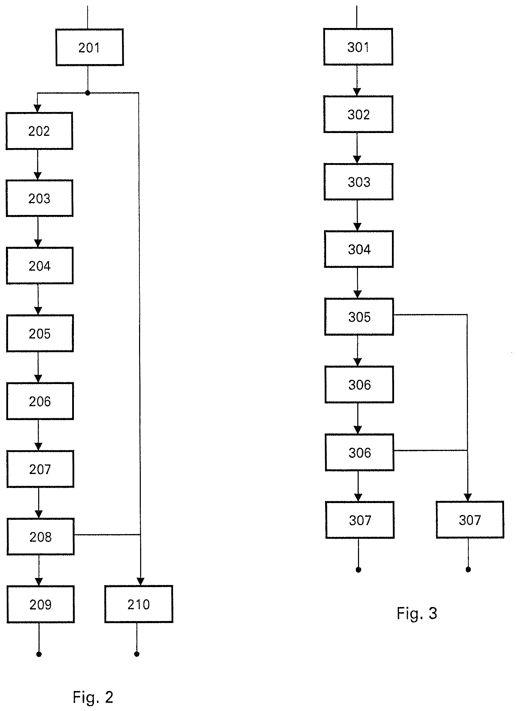

Das Verfahren zum Betreiben, insbesondere zum gesicherten Betreiben des Netzwerksystems gemäß Figur 1 wird nachfolgend mit Hilfe der Figuren 2 und 3 näher ausgeführt.

Figur 2 zeigt ein erstes Ausführungsbeispiel eines Verfahrens zum Registrieren einer mobilen Recheneinrichtung 14 in einem Netzwerksystem 2. Beispielsweise kann eine mobile Recheneinrichtung 14 eines berechtigten Benutzers registriert werden, um mittels der registrierten Recheneinrichtung 14 gesperrte Netzwerkeinrichtungen 8.1, 8.2 für den Benutzer freizugeben. Hierzu ist es erforderlich, eine Kennung der mobilen Recheneinrichtung 14 zusammen mit einer Kennung des Benutzers zentral zu speichern, also zu registrieren, um später anhand der gespeicherten Informationen und der mobilen Recheneinrichtung 14 eine gesicherte Netzwerkeinrichtung 8.1, 8.2 freizugeben.

Für eine Registrierung einer mobilen Recheneinrichtung 14 kann sich in einem optionalen ersten Schritt 201 ein berechtigter Benutzer an einer Netzwerkeinrichtung, wie einem Client-Computer 8.1 oder einem Netzwerkdrucker 8.2, authentifizieren. Beispielsweise kann in einem Anmeldeschritt ein Benutzer eine dritte dem Benutzer zugeordnete Kennung, wie ein Benutzername, und einen Schlüssel beispielsweise mittels einer Tastatur eingegeben. Der Schlüssel kann beispielsweise ein Passwort oder eine PIN-Nummer sein, das/die bevorzugt nur dem Benutzer bekannt ist. Hierdurch kann sichergestellt werden, dass nur ein berechtigter Benutzer eine Registrierung einer mobilen Recheneinrichtung 14 durchführen kann.

Nach einer erfolgreichen Authentifizierung kann das Verfahren mit Schritt 202 fortgesetzt werden. Bei einem negativen Ergebnis kann der Benutzer zur nochmaligen Eingabe aufgefordert werden und/oder das Verfahren beendet werden (Schritt 210).

In dem nächsten Schritt 202 kann die dritte dem Benutzer zugeordnete Kennung an den Server 4 von der Netzwerkeinrichtung 8.1, 8.2 übertragen werden. Die dritte Kennung ist vorzugsweise einmalig und dem Benutzer insbesondere eindeutig zugeordnet. Eine zweifelsfreie Identifizierung des Benutzers ist möglich. Bevorzugt kann die dritte Kennung über das Netzwerk 12 übertragen werden. Es versteht sich, dass auch weitere Daten übertragen werden können.

Der Server 4 kann dazu konfiguriert sein, nach Empfang der dritten eindeutigen Kennung einen Code zu erzeugen (Schritt 203). Der Code kann einmalig sein. Beispielsweise kann eine Zufallszahl generiert werden. Es versteht sich, dass eine Vielzahl an Codes dem Server 4 beispielsweise von einem anderen Server bereitgestellt werden kann, so dass keine Erzeugung des Codes erfolgen muss.

In einem nächsten Schritt 204 kann zumindest der erzeugte oder bereitgestellte Code als Antwort auf die Anfrage des Benutzers bzw. den Empfang der dritten Kennung an die entsprechende Netzwerkeinrichtung 8.1, 8.2 übertragen werden. Ferner kann in diesem Schritt 204 der erzeugte Code, wie die Zufallszahl, zusammen mit der dritten Kennung in einer Datenbank 6 des Servers 4 gespeichert werden. Insbesondere kann eine Kopie des Codes oder ein zu dem übertragenen Code korrespondierender Code gespeichert werden.

Es versteht sich, dass vor der Übermittlung des Codes an die Netzwerkeinrichtung 8.1, 8.2 der Server 4 zunächst eine Prüfung durchführen kann. Beispielsweise kann zunächst überprüft werden, ob der Benutzer überhaupt berechtigt ist, eine mobile Recheneinrichtung 14 registrieren zu lassen. Der Server 4 kann beispielsweise eine Datenbank 6 nach der dritten Kennung durchsuchen. Beispielsweise kann überprüft werden, ob für den Benutzer bereits eine mobile Recheneinrichtung 14 registriert ist. Ist dies der Fall, dann kann eine Registrierung davon abhängig gemacht werden, dass die vorherige Registrierung gelöscht wird. Bei einem positiven Ergebnis kann dann der Code übertragen werden.

Nachdem die Netzwerkeinrichtung 8.1, 8.2 den Code empfangen hat, kann der Code von der zu registrierenden mobilen Recheneinrichtung 14 erfasst werden (Schritt 205).

Grundsätzlich kann der Code auf verschiedene Weise von der mobilen Recheneinrichtung 14 erfasst werden. Beispielsweise kann die mobile Recheneinrichtung 14 dazu konfiguriert sein, den Code (automatisch) über eine drahtlose oder drahtgebundene Verbindung aus der Netzwerkeinrichtung 8.1, 8.2 auszulesen. Beispielsweise kann zwischen der Netzwerkeinrichtung 8.1 und der mobilen Recheneinrichtung 14 eine Bluetooth Verbindung hergestellt werden.

Alternativ kann beispielsweise ein Code in Form von Schriftzeichen zur Verfügung gestellt und angezeigt werden, welche in die mobile Recheneinrichtung 14 von einem Benutzer manuell eingebbar sind.

Besonders bevorzugt ist es, wenn der übertragene Code als zweidimensionaler Barcode auf einem Display 10.1, 10.2 der Netzwerkeinrichtung 8.1, 8.2 angezeigt wird. Ein solcher Code kann in besonders einfacher Weise durch Fotografieren von der mobilen Recheneinrichtung 14 erfasst werden. Insbesondere weisen moderne mobile Recheneinrichtungen 14 in der Regel eine Kamera auf, so dass ein Benutzer den Code von der Anzeigeneinrichtung 10.1, 10.2 abfotografieren kann. Es ist weder eine Kommunikationsverbindung zwischen mobiler Recheneinrichtung 14 und der Netzwerkeinrichtung 8.1, 8.2 erforderlich, noch ist eine aufwendige manuelle Eingabe notwendig, welche leicht zu einer fehlerhaften Erfassung führen kann.

Nach Erfassung des Codes durch die mobile Recheneinrichtung 14 kann eine zweite Kennung, welche der mobilen Recheneinrichtung 14 zugeordnet ist, mit dem Code in Schritt 206 verknüpft werden. Hierfür kann beispielsweise auf die mobile Recheneinrichtung 14 eine geeignete Applikation geladen werden. Nach dem Start der Applikation kann der Code beispielsweise zunächst durch Fotografieren erfasst (Schritt 205) und die zweite eindeutige Kennung dann automatisch aus der mobilen Recheneinrichtung 14 ausgelesen werden (Schritt 206). Die zweite Kennung kann vorzugsweise einmalig und insbesondere eindeutig der mobilen Recheneinrichtung 14 zugeordnet sein. Bei der zweiten Kennung kann es sich bevorzugt um eine fest mit der mobilen Recheneinrichtung 14 verbundene Seriennummer handeln. Insbesondere kann die IMEI-Kennung herangezogen werden.

In einem nächsten Schritt 207 können der Code und die zweite Kennung von der mobilen Recheneinrichtung 14 an den Server 4 übertragen werden. Bevorzugt kann die Applikation der mobilen Recheneinrichtung 14 eine (automatische) Aussendung des Codes zusammen mit der eindeutigen zweiten Kennung veranlassen. Die Daten können beispielsweise über das Netzwerk 12 oder einen anderen Kommunikationskanal 18 übertragen werden. Ein anderer Kommunikationskanal 18 kann bevorzugt gewählt werden, um eine höhere Sicherheit zur Verfügung zu stellen.

Wenn der Server 4 die zweite Kennung und den Code empfangen hat, kann im nächsten Schritt 208 die Datenbank 6 durchsucht werden. Insbesondere kann nach einem zuvor gespeicherten Code (Schritt 204) gesucht werden, der identisch mit dem empfangenen Code ist oder zu dem Code korrespondiert. Für den Fall, dass als Code eine Zufallszahl generiert oder bereitgestellt wurde (Schritt 203), kann der Server 4 insbesondere dazu konfiguriert sein, zu prüfen, ob die von der mobilen Recheneinrichtung 14 empfangene Zufallszahl mit einer gespeicherten Zufallszahl übereinstimmt.

Bei einem positiven Prüfungsergebnis können die aufgefundene dritte Kennung, welche mit dem gespeicherten Code verknüpft ist, und die zweite Kennung, welche mit dem empfangenen Code verknüpft ist, einander zugeordnet werden (Schritt 209). Mit anderen Worten kann eine Benutzerkennung eindeutig einer zweiten Kennung der mobilen Recheneinrichtung 14 eines Benutzers zugeordnet werden. Die Zuordnung der beiden Kennungen kann in der Datenbank 6 gespeichert werden. Der Code kann beispielsweise gelöscht und/oder erneut für eine weitere Registrierung verwendet werden.

Zusätzlich können weitere Daten, wie Zeitdaten, zusammen mit den beiden Kennungen abgespeichert werden. Auch können unterschiedliche Berechtigungsstufen vorgegeben werden und mit den entsprechenden Daten verknüpft werden. So kann es eine Stufe geben, der Benutzer zugeordnet sind, welche sämtliche Netzwerkeinrichtungen 8.1, 8.2 beitreiben dürfen. Es kann eine weitere Stufe geben, die es Benutzern erlaubt, nur bestimmte Netzwerkeinrichtungen 8.1, 8.2 zu benutzen. In diesem Fall können beispielsweise Kennungen der entsprechenden zugelassenen Netzwerkeinrichtung 8.1, 8.2 mit abgespeichert werden. Auch können bestimmte Benutzer nur eine Berechtigung zur Ausführung bestimmter Funktionen einer Netzwerkeinrichtung 8.1, 8.2 haben, wie die Berechtigung bei einem Multifunktionsgerät zu drucken, aber nicht zu faxen. Auch dies kann in der Datenbank 6 gespeichert werden.

Für den Fall, dass der empfangene Code nicht mit einem gespeicherten Code übereinstimmt, kann eine Fehlermeldung an die Netzwerkeinrichtung 8.1, 8.2 und/oder die mobile Recheneinrichtung 14 übermittelt werden. Das Registrierungsverfahren kann abgebrochen (Schritt 210) werden.

Es versteht sich, dass die Kommunikation zwischen den verschiedenen Einrichtungen bevorzugt zumindest teilweise verschlüsselt durchführbar ist. Hierdurch kann ein Ausspähen der Kennungen verhindert werden.

Nach einer erfolgreichen Registrierung, welche grundsätzlich auch in einer anderen als der zuvor beschriebenen Weise durchgeführt werden kann, kann ein Benutzer mit seiner registrierten mobilen Recheneinrichtung 14 in einfacher Weise eine gesicherte Netzwerkeinrichtung 8.1, 8.2, wie beispielsweise eine Druckeinrichtung 8.2, freigeben und betreiben.

Das Verfahren zum Freigeben einer gesicherten Netzwerkeinrichtung 8.1, 8.2 wird nachfolgend mit Hilfe der Figur 3 ausführlich dargelegt. Die Figur 3 zeigt ein weiteres Flussdiagramm eines weiteren Ausführungsbeispiels eines Verfahrens zum Freigeben der Netzwerkeinrichtung 8.1, 8.2 gemäß der vorliegenden Erfindung.

Insbesondere kann es sich bei der zu betreibenden Netzwerkeinrichtung 8.1, 8.2 um eine gesicherte Netzwerkressource handeln. Eine gesicherte Netzwerkressource zeichnet sich dadurch aus, dass zur Freigabe der Ressource eine Authentifizierung erforderlich ist. Nachfolgend wird im Ausführungsbeispiel von einer Druckeinrichtung 8.2 als freizugebende Netzwerkeinrichtung 8.2 ausgegangen.

Beispielsweise hat ein Benutzer in herkömmlicher Weise einen Druckauftrag erzeugt und diesen an die gesicherte Druckeinrichtung 8.2 zum Drucken gesendet. Um zu verhindern, dass ein Dritter den Inhalt des Druckauftrags zur Kenntnis nehmen kann, ist es erforderlich, dass sich der Benutzer beim Druckvorgang in unmittelbarer Nähe der Druckeinrichtung 8.2 befindet und sich zur Freigabe der Druckeinrichtung 8.2 bzw. des Druckvorgangs an dieser authentifiziert.

Zum Freigeben der Druckeinrichtung 8.2 bzw. des Druckauftrags kann der Benutzer seine registrierte mobile Recheneinrichtung 14 verwenden.

In einem ersten optionalen Schritt 301 kann der Benutzer seinen Druckauftrag aus einer Auftragsliste auswählen, wobei der Druckauftrag insbesondere zumindest mit einer dritten dem Benutzer zugeordneten Kennung verknüpft sein kann.

In einem nächsten Schritt 302 kann der Benutzer mittels einer zuvor registrierten mobilen Recheneinrichtung 14 eine an der Druckeinrichtung 8.2 angebrachte erste Kennung erfassen. Wie bereits beschrieben wurde, kann die erste Kennung beispielsweise ein zweidimensionaler Barcode sein. Die erste Kennung kann zum Beispiel durch eine Anzeige 16 angezeigt werden. Die Druckeinrichtung 8.2 kann mit einer entsprechenden Kennung bedruckt sein. Die erste Kennung kann in besonders einfacher Weise in Form eines Aufklebers an der Druckeinrichtung 8.2 angebracht werden.

Bevorzugt kann die erste Kennung, insbesondere ein Barcode, durch Fotografieren von der mobilen Recheneinrichtung 14 erfasst werden. Die mobile Recheneinrichtung 14 kann eine entsprechende Applikation aufweisen, die ein Abfotografieren der ersten Kennung ermöglicht. Es versteht sich auch hier, dass die erste Kennung auch in anderer Weise, beispielsweise manuell, erfasst werden kann.

In einem nächsten Schritt 303 kann dann eine zweite der mobilen Recheneinrichtung 14 zugeordnete Kennung aus der mobilen Recheneinrichtung 14 ausgelesen werden. Beispielsweise kann dies (automatisch) von einer Applikation bewirkt werden. Die erfasste erste Kennung und die zweite Kennung, beispielweise eine Seriennummer, wie eine IMEI-Kennung, können miteinander verknüpft werden.

Anschließend können in einem Schritt 304 die entsprechenden Daten, also die beiden Kennungen, von der mobilen Recheneinrichtung 14 an den Server 4 übertragen werden. Beispielsweise können die Kennungen über einen drahtlosen Kommunikationskanal 18 übertragen werden. Wie zuvor bereits beschrieben wurde, sind in einer Datenbank 6 in Folge eines vorherigen Registrierungsverfahrens dritte Benutzerkennungen zusammen mit zweiten Kennungen der mobilen Recheneinrichtungen der Benutzer zusammen gespeichert. Ferner können in der Datenbank 6 auch die ersten Kennungen von bevorzugt sämtlichen Netzwerkeinrichtungen 8.1, 8.2 gespeichert sein. Beispielsweise können sämtliche erste Kennungen zusammen mit der entsprechenden Netzwerkadresse der Netzwerkeinrichtungen 8.1, 8.2 gespeichert sein.

Bei Empfang der ersten Kennung und der zweiten Kennung kann der Server 4 beispielsweise zunächst die Datenbank 6 durchsuchen. Insbesondere kann der Server 4 prüfen, ob es sich bei der zweiten Kennung um eine gültige Kennung, also um eine registrierte Kennung, handelt (Schritt 305). Hierbei kann in der Datenbank 6 nach einer identischen zweiten Kennung gesucht werden. Bei einem positiven Prüfungsergebnis kann die Benutzerkennung, also die dritte Kennung, aus der Datenbank 6 ausgelesen werden.

Ferner kann anhand der ersten Kennung bestimmt werden, welche Netzwerkeinrichtung 8.1, 8.2 freigegeben werden soll. Nach der Bestimmung der freizugebenden Netzwerkeinrichtung 8.2 kann in einem Zwischenschritt darüber hinaus überprüft werden, ob der Benutzer berechtigt ist, die entsprechende Netzwerkeinrichtung 8.2 zu betreiben. Wie bereits ausgeführt wurde, können unterschiedliche Berechtigungsstufen vorgegeben werden, so dass bestimmte Benutzer nur eine eingeschränkte Berechtigung, beispielsweise beschränkt auf bestimmte Funktionen und/oder bestimmte Netzwerkeinrichtungen 8.1, 8.2, haben können. Diese Informationen können bevorzugt in der Datenbank 6 gespeichert sein.

Wenn auch diese optionale Prüfung positiv ist, kann der Server 4 ein Freigabesignal beispielsweise über das Netzwerk 12 an die freizugebende Druckeinrichtung 8.2 senden (Schritt 306) .

Bei einem negativen Ergebnis kann eine Fehlermeldung an die Druckeinrichtung 8.2 und/oder die mobile Recheneinrichtung 14 gesendet werden und der Vorgang abgebrochen werden (Schritt 308). Beispielsweise kann der Benutzer aufgefordert werden, sich zunächst zu registrieren. So kann das Verfahren gemäß Figur 2 unmittelbar ausgehend von der Druckeinrichtung 8.2 mit Schritt 201 gestartet werden.

Um nur die Druckaufträge freizugeben, die dem Benutzer der mobilen Recheneinrichtung 14 zugeordnet sind, also beispielsweise mit der dritten Kennung versehen sind, kann das Freigabesignal zumindest die dritte Kennung umfassen. In einem Schritt 307 kann dann in der Druckeinrichtung 8.2 ein Vergleich der von dem Server 4 gesendeten dritten Kennung und der mit den Druckaufträgen verknüpften dritten Kennungen durchgeführt werden.

Es versteht sich, dass dieser Schritt auch auf einem anderen Gerät, wie einem Druckserver oder einem Client-Computer durchgeführt werden kann.

Bei einem positiven Ergebnis kann in einem Schritt 308 der mindestens eine Druckauftrag auf der Druckeinrichtung 8.2 durchgeführt werden. Hingegen wird bei einem negativen Ergebnis der Druckvorgang abgebrochen. Dem Benutzer kann, wie zuvor bereits beschrieben wurde, ein entsprechender Fehler angezeigt werden.

Es versteht sich, dass das zuvor beschriebene Verfahren in entsprechender Weise auf andere Netzwerkeinrichtungen, wie Scanner, Faxgeräte, etc. anwendbar ist. Es versteht sich ferner, dass zusätzlich weitere Sicherheitsmechanismen, wie geeignete Verschlüsselungsverfahren, vorgesehen sein können.

## Patentansprüche

1. Verfahren zum Freigeben einer Netzwerkeinrichtung (8.1, 8.2) eines Netzwerksystems (2), welches mindestens die eine Netzwerkeinrichtung (8.1, 8.2) und mindestens einen Server (4) umfasst, wobei in einer Datenbank (6) des Servers (4) mindestens eine zweite einer mobilen Recheneinrichtung (14) zugeordnete Kennung gespeichert ist, wobei die zweite Kennung ein einmaliger Code ist, welcher eindeutig der entsprechenden mobilen Recheneinrichtung (14) zugeordnet ist, umfassend:
- Erfassen einer an der freizugebenden Netzwerkeinrichtung (8.1, 8.2) angebrachten ersten Kennung durch die mobile Recheneinrichtung (14),
- Übertragen der erfassten ersten Kennung und einer der erfassenden mobilen Recheneinrichtung (14) zugeordneten zweiten Kennung von der mobilen Recheneinrichtung (14) an den Server (4),
- Vergleichen der übertragenen zweiten Kennung mit der mindestens einen in der Datenbank (6) gespeicherten zweiten Kennung, und
- Freigeben der Netzwerkeinrichtung (8.1, 8.2) durch den Server (4) bei einem positiven Überprüfungsergebnis.

2. Verfahren nach Anspruch 1, **dadurch gekennzeichnet, dass** die erste Kennung ein Barcode, insbesondere ein zweidimensionaler Barcode, ist.

3. Verfahren nach Anspruch 1 oder 2, **dadurch gekennzeichnet, dass** die erste Kennung durch Fotografieren von der mobilen Recheneinrichtung (14) erfasst wird.

4. Verfahren nach einem der vorherigen Ansprüche, **dadurch gekennzeichnet, dass** zum Freigeben der Netzwerkeinrichtung (8.1, 8.2) ein Freigabesignal von dem Server (4) an die Netzwerkeinrichtung (8.1, 8.2) übertragen wird, wobei das Freigabesignal insbesondere eine dritte dem Benutzer zugeordnete Kennung umfassen kann.

5. Verfahren nach einem der vorherigen Ansprüche, **dadurch gekennzeichnet, dass** die zweite Kennung eine Seriennummer, insbesondere eine International Mobile Station Equipment Identity, ist.

6. Verfahren zum Registrieren einer mobilen Recheneinrichtung (14) in einem Netzwerksystem (2) mit mindestens einer Netzwerkeinrichtung (8.1, 8.2) und mindestens einem Server (4), umfassend:
- Übertragen einer dem Benutzer zugeordneten dritten Kennung von einer Netzwerkeinrichtung (8.1, 8.2) an einen Server (4),
- Übertragen eines Codes an die Netzwerkeinrichtung (8.1, 8.2), wobei der Code zusammen mit der dritten Kennung in einer Datenbank (6) des Servers (4) gespeichert wird,
- Erfassen des an die Netzwerkeinrichtung (8.1, 8.2) übertragenen Codes von einer mobilen Recheneinrichtung (14),
- Übertragen des erfassten Codes und einer der mobilen Recheneinrichtung (14) zugeordneten zweiten Kennung an den Server (4),
- Vergleichen des empfangenen Codes mit dem zumindest einen in der Datenbank (6) gespeicherten Code, und
- Speichern der dritten Kennung zusammen mit der zweiten Kennung in der Datenbank (6) bei einem positiven Vergleichsergebnis.

7. Verfahren nach Anspruch 6, **dadurch gekennzeichnet, dass** der Code eine Zufallszahl insbesondere in Form eines Barcodes ist.

8. Verfahren nach Anspruch 6 oder 7, **dadurch gekennzeichnet, dass** der Code zum Erfassen durch die mobile Recheneinrichtung (14) von der Netzwerkeinrichtung (8.1, 8.2) angezeigt wird.

9. Verfahren nach Anspruch 8, **dadurch gekennzeichnet, dass** der angezeigte Code durch Fotografieren von der mobilen Recheneinrichtung (14) erfasst wird.

10. Verfahren nach einem der vorherigen Ansprüche 6 bis 9, **dadurch gekennzeichnet, dass** die zweite Kennung eine Seriennummer, insbesondere eine International Mobile Station Equipment Identity, ist.

11. Verfahren nach einem der vorherigen Ansprüche 6 bis 10, **dadurch gekennzeichnet, dass** vor dem Übertragen der dritten Kennung von der Netzwerkeinrichtung (8.1, 8.2) an den Server (4) eine Authentifizierung eines Benutzers an der Netzwerkeinrichtung (8.1, 8.2) durchgeführt wird.

12. Computerprogramm mit Instruktionen ausführbar auf einem Prozessor derart, dass eine Netzwerkeinrichtung (8.1, 8.2) mittels des Verfahrens nach einem der Patentansprüche 1 bis 5 freigegeben wird, und/oder dass eine mobile Recheneinrichtung (14) mittels des Verfahrens nach einem der Patentansprüche 6 bis 11 registriert wird.

13. Computerprogrammprodukt umfassend ein Computerprogramm mit Instruktionen ausführbar auf einem Prozessor derart, dass eine Netzwerkeinrichtung (8.1, 8.2) mittels des Verfahrens nach einem der Patentansprüche 1 bis 5 freigegeben wird, und/oder
dass eine mobile Recheneinrichtung (14) mittels des Verfahrens nach einem der Patentansprüche 6 bis 11 registriert wird.

## Claims

1. A method for releasing a network device (8.1, 8.2) of a network system (2), which comprises at least the one network device (8.1, 8.2) and at least one server (4), wherein at least one second identifier assigned to a mobile computing device (14) is stored in a database (6) of the server (4), wherein the second identifier is a unique code, which is unambiguously assigned to the corresponding mobile computing device (14), comprising:
- Detecting a first identifier installed on the network device (8.1, 8.2) by means of the mobile computing device (14),
- Transmitting the detected first identifier and a second identifier assigned to the detecting mobile computing device (14) from the mobile computing device (14) to the server (4),
- Comparing the transmitted second identifier with the at least one second identifier stored in the database (6), and
- Releasing the network device (8.1, 8.2) through the server (4) if the result of the check is positive.

2. The method according to claim 1, **characterised in that** the first identifier is a barcode, in particular a two-dimensional barcode.

3. The method according to claim 1 or 2, **characterised in that** the first identifier is detected by taking a photograph with the mobile computing device (14).

4. The method according to one of the preceding claims, **characterised in that**, for releasing the network device (8.1, 8.2), a release signal is transmitted from the server (4) to the network device (8.1,8.2), wherein the release signal may comprise, in particular, a third identifier assigned to the user.

5. The method according to one of the preceding claims, **characterised in that** the second identifier is a serial number, in particular an international mobile station equipment identity.

6. A method for registering a mobile computing device (14) in a network system (2) having at least one network device (8.1, 8.2) and at least one server (4), comprising;
- Transmitting a third identifier assigned to the user from a network device (8.1, 8.2) to a server (4),
- Transmitting a code to the network device (8.1, 8.2), wherein the code together with the third identifier is stored in a database (6) of the server (4),
- Detecting the code transmitted to the network device (8.1,8.2) by means of a mobile computing device (14),
- Transmitting the detected code and a second identifier assigned to the mobile computing device (14) to the server (4),
- Comparing the received code with the at least one code stored in the database (6), and
- Storing the third identifier together with the second identifier in the database (6) if the result of the check is positive.

7. The method according to claim 6, **characterised in that** the code is a random number, in particular in the form of a barcode.

8. The method according to claim 6 or 7, **characterised in that** the code to be detected by the mobile computing device (14) is displayed by the network device (8.1, 8.2).

9. The method according to claim 8, **characterised in that** the indicated code is detected by taking a photograph using the mobile computing device (14).

10. The method according to one of previous claims 6 to 9, **characterised in that** the second identifier is a serial number, in particular an international mobile station equipment identity.

11. The method according to one of claims 6 to 10, **characterised in that** prior to transmitting the third identifier from the network device (8.1, 8.2) to the server (4) an authentication of a user is carried out on the network device (8.1, 8.2).

12. A computer program with instructions executable on a processor such that a network device (8.1, 8.2) is released by means of the method according to one of patent claims 1 to 5, and/or in that a mobile computing device (14) is registered by means of the method according to one of patent claims 6 to 11.

13. A computer program product comprising a computer program with instructions executable on a processor such that the network device (8.1, 8.2) is released by means of the method according to one of patent claims 1 to 5, and/or in that the mobile computing device (14) is registered by means of the method according to one of patent claims 6 to 11.

## Revendications

1. Procédé de libération d'un dispositif de réseau (8.1, 8.2) d'un système de réseau (2), qui comprend au moins le dispositif de réseau (8.1, 8.2) et au moins un server (4), sachant que, dans une banque de données (6) du server (4), est mémorisée au moins une deuxième identification, qui est associée à un dispositif de calcul mobile (14), sachant que la deuxième identification est un code particulier unique, qui est associé de manière univoque au dispositif de calcul mobile (14) correspondant,
comprenant:
- Détection par le dispositif de calcul mobile (14) d'une première identification, qui est appliquée su dispositif de réseau (8.1, 8.2) à libérer,
- transmission de la première identification détectée et d'une deuxième identification associée au dispositif de calcul mobile (14), du dispositif de calcul mobile (14) au server (4),
- comparaison de la deuxième identification transmise avec l'au moins une deuxième identification mémorisée dans la banque de données (6), et
- libération du dispositif de réseau (8.1, 8.2) par le server (4), lors d'un résultat positif de la vérification.

2. Procédé selon la revendication 1,
**caractérisé en ce que** la première identification est un code-barres, en particulier un code-barres bidimensionnel.

3. Procédé selon revendication 1 ou 2,
**caractérisé en ce que** la première identification est détectée photographiquement par le dispositif de calcul mobile (14).

4. Procédé selon l'une des revendications précédentes,
**caractérisé en ce que**, pour la Libération du dispositif de réseau (8.1, 8.2) à libérer, un signal de libération est transmis du server (4) au dispositif de réseau (8.1, 8.2), sachant que le signal de libération peut particulièrement comprendre une troisième identification, qui est associée à l'utilisateur.

5. Procédé selon l'une des revendications précédentes,
**caractérisé en ce que** la deuxième identification est un numéro de série, en particulier une International Mobile Station Equipment Identity.

6. Procédé pour l'enregistrement d'un dispositif de calcul mobile (14) dans un dispositif de réseau (2) avec au moins un dispositif de réseau (8.1, 8.2) et au moins un server (4), comprenant:
- transmission d'un dispositif de réseau (8.1, 8.2) an un server (4), d'une troisième identification associée à l'utilisateur,
- transmission d'un code au dispositif de réseau (8.1, 8.2), sachant que le code est mémorisé, en commun avec la troisième identification, dans une banque de données (6) du server (4),
- détection par un dispositif de calcul mobile (14) du code transmis au dispositif de réseau (8.1, 8.2),
- transmission au server (4) du code détecté et d'une deuxième identification associée au dispositif de calcul mobile (14),
- comparaison du code reçu avec l'au moins un code mémorisé dans la banque de données (6), et
- mémorisation de la troisième identification, en commun avec la deuxième identification dans la banque de données (6), lors d'un résultat positif de la comparaison.

7. Procédé selon la revendication 6,
**caractérisé en ce que** le code est un chiffre aléatoire, en particulier formé par un code-barres.

8. Procédé selon les revendications 6 ou 7,
**caractérisé en ce que** le code, pour la détection par le dispositif de calcul mobile (14), est affiché par le dispositif de réseau (8.1, 8.2).

9. Procédé selon la revendication 8,
**caractérisé en ce que** le code affiché est détecté photographiquement par la dispositif de calcul mobile (14).

10. Procédé selon l'une des revendications 6 à 9,
**caractérisé en ce que** la deuxième identification est un numéro de série, en particulier une International Mobile Station Equipment Identity.

11. Procédé selon l'une des revendications précédentes 6 à 10,
**caractérisé en ce que**, avant la transmission de la troisième identification du dispositif de réseau (8.1, 8.2) au server (4), une authentification d'un utilisateur est effectuée sur le dispositif de réseau (8.1,8.2).

12. Programme d'ordinateur avec instructions, pouvant être exécuté sur un processeur de manière à ce qu'un dispositif de réseau (8.1, 8.2) soit libéré au moyen du procédé selon l'une des revendications 1 à 5
et / ou qu'un dispositif de calcul (14) soit enregistré au moyen du procédés selon l'une des revendications 6 à 11.

13. Produit de programme d'ordinateur comprenant un programme d'ordinateur avec instructions pouvant être exécuté sur un processeur de manière à ce qu'un dispositif de réseau (8.1, 8.2) soit libéré au moyen du procédé selon l'une des revendications 1 à 5
et / ou qu'un dispositif de calcul (14) soit enregistré au moyen du procédés selon l'une des revendications 6 à 11.
